# EUROPEAN PATENT APPLICATION

(11) **EP 4 832 555 A1**
(43) Date of publication of application: **28.10.2026**
(21) Application number: 25736129.5
(22) Date of filing: 02.01.2025
(51) Int. Cl.: H04W 24/08

(54) **COMMUNICATION METHOD AND COMMUNICATION APPARATUS**

(30) Priority: 05.01.2024 CN 202410017931
(71) Applicant: Huawei Technologies Co., Ltd., Shenzhen, Guangdong 518129 (CN)
(72) Inventor: WANG, Zhonglong, Shenzhen, Guangdong 518129 (CN); XIE, Xinqian, Shenzhen, Guangdong 518129 (CN); SHAO, Jiafeng, Shenzhen, Guangdong 518129 (CN)
(74) Representative: Körber, Martin Hans
(86) International application number: PCT/CN2025/070049
(87) International publication number: WO 2025/146064

(57) **Abstract**

This application provides a communication method, including: A network device sends a plurality of signals to a terminal device, and the terminal device reports measurement information to the network device after measuring the plurality of signals, where the measurement information includes information about a first-path delay of at least one of the plurality of signals or an identifier of a first signal, and the first signal is a signal having a smallest first-path delay in the plurality of signals. Therefore, the network device may determine, based on the measurement information fed back by the terminal device, whether an LOS path exists between the terminal device and the network device, so that the network device can determine whether sensing information of the terminal device can be used to enhance performance of communication with the terminal device.

## Description

This application claims priority to Chinese Patent Application No. 202410017931.6, filed with the China National Intellectual Property Administration on January 5, 2024 and entitled "COMMUNICATION METHOD AND COMMUNICATION APPARATUS", which is incorporated herein by reference in its entirety.

### TECHNICAL FIELD

Embodiments of this application relate to the communication field, and specifically, to a communication method and a communication apparatus.

### BACKGROUND

Integrated sensing and communication is a key technology for wireless communication networks, aims to integrate two functions of wireless communication and sensing into a same system, and implements sensing functions such as positioning, detection, imaging, and identification of a target by using various propagation characteristics of radio signals, to obtain surrounding physical environment information, explore a communication capability, and improve user experience.

At present, in an integrated sensing and communication solution, a network device cannot determine a specific status of a signal transmission path between a terminal device and the network device. As a result, the network device cannot determine whether sensing information can be used to enhance performance of communication with the terminal device.

### SUMMARY

This application provides a communication method, so that a network device can determine a status of a communication signal transmission path between the network device and a terminal device. For example, the network device determines whether a line of sight (line of sight, LOS) path exists between the network device and the terminal device, so as to determine whether sensing information can be used to enhance performance of communication with the terminal device.

According to a first aspect, a communication method is provided. The method may be performed by a terminal device, or may be performed by a chip, a circuit, or the like. This is not limited in this application.

The communication method includes: receiving a plurality of signals; and sending measurement information, where the measurement information includes information about a first-path delay of at least one of the plurality of signals or an identifier of a first signal, and the first signal is a signal having a smallest first-path delay in the plurality of signals.

Based on the foregoing technical solution, an example in which the method is performed by the terminal device is used. After receiving the plurality of signals, and measuring the plurality of signals, the terminal device reports information including the identifier of the first signal to a network device. The first signal is the signal having the smallest first-path delay in the plurality of signals. Therefore, the network device may determine a specific status of a signal transmission path between the terminal device and the network device based on the identifier of the first signal (for example, determine whether an LOS path exists between the terminal device and the network device), so that the network device can determine whether sensing information of the terminal device can be used to enhance performance of communication with the terminal device.

Alternatively, after receiving the plurality of signals, and measuring the plurality of signals, the terminal device reports, to a network device, the information including the first-path delay of the at least one signal. Therefore, the network device may determine a specific status of a signal transmission path between the terminal device and the network device based on the information about the first-path delay of the at least one signal fed back by the terminal device (for example, determine whether an LOS path exists between the terminal device and the network device), so that the network device can determine whether sensing information of the terminal device can be used to enhance performance of communication with the terminal device.

With reference to the first aspect, in some implementations of the first aspect, the measurement information includes the information about the first-path delay of the at least one of the plurality of signals and an identifier of the at least one signal.

Based on the foregoing technical solution, the terminal device reports the information about the first-path delay of the at least one of the plurality of signals and the identifier of the at least one signal, and a network device may determine a specific status of a signal transmission path between the terminal device and the network device based on the information about the first-path delay of the at least one signal reported by the terminal device and prior information of the network device (for example, determine whether an LOS path exists between the terminal device and the network device), so that the network device can determine whether sensing information of the terminal device can be used to enhance performance of communication with the terminal device.

With reference to the first aspect, in some implementations of the first aspect, the measurement information further includes information about a first-path power of at least one of the plurality of signals.

Based on the foregoing technical solution, the terminal device further reports, by using the measurement information, the information about the first-path power of the at least one of the plurality of signals, so that a network device can perform determining based on more assistance information when determining a specific status of a signal transmission path between the terminal device and the network device, thereby improving determining accuracy.

With reference to the first aspect, in some implementations of the first aspect, the measurement information includes the identifier of the first signal, and information about a first-path delay and/or a first-path power of the first signal.

Based on the foregoing technical solution, the terminal device reports, by using the measurement information, the information about the first-path delay of the first signal and/or the information about the first-path power corresponding to the first signal, so that a network device can perform determining based on more assistance information when determining a specific status of a signal transmission path between the terminal device and the network device, thereby improving determining accuracy.

With reference to the first aspect, in some implementations of the first aspect, the information about the first-path delay indicates one of N first-path delays, and N is an integer greater than 1.

Based on the foregoing technical solution, the terminal device may quantize and feed back continuous delay values by using information about first-path delays, so that overheads of first-path delays, fed back by the terminal device, of signals can be reduced to some extent.

With reference to the first aspect, in some implementations of the first aspect, the N first-path delays include a first first-path delay, and the first first-path delay is a first-path delay less than or equal to 0.

The terminal device may perform downlink synchronization by receiving a plurality of synchronization signals (synchronization signals, SSBs) and PBCH blocks (PBCH blocks) that are sent by a network device in different beam directions. For example, the terminal device performs downlink synchronization by receiving an SSB having a highest received power in the plurality of SSBs, where a first-path delay calculated based on the SSB having the highest received power is not necessarily the smallest. Because the first-path delay calculated based on the SSB having the highest received power is 0, based on the foregoing technical solution, the N first-path delays definitely include a first-path delay less than or equal to 0, that is, the first first-path delay.

With reference to the first aspect, in some implementations of the first aspect, the information about the first-path power indicates one of Q first-path powers, and Q is an integer greater than 1.

Based on the foregoing technical solution, the terminal device may quantize and feed back continuous power values by using information about first-path powers, so that overheads of first-path powers, fed back by the terminal device, of signals can be reduced to some extent.

With reference to the first aspect, in some implementations of the first aspect, before the sending the measurement information, the method further includes: determining a first-path delay and/or a first-path power of each of the plurality of signals.

With reference to the first aspect, in some implementations of the first aspect, the plurality of signals include the first signal and a second signal, and the first signal and the second signal correspond to different beam directions.

With reference to the first aspect, in some implementations of the first aspect, the identifier of the first signal may be an identifier of a beam corresponding to the first signal and/or an identifier of a resource occupied by the first signal.

Based on the foregoing technical solution, an identifier of a signal may be an identifier of a beam corresponding to the signal, or may be an identifier of a resource occupied by the signal. This is not limited in the technical solution, and flexibility of the solution is improved.

With reference to the first aspect, in some implementations of the first aspect, the measurement information is used for determining whether sensing information is used for assisting in communication.

According to a second aspect, a communication method is provided. The method may be performed by a network device, or may be performed by a chip, a circuit, or the like. This is not limited in this application.

The communication method includes: sending a plurality of signals; and receiving measurement information, where the measurement information includes information about a first-path delay of at least one of the plurality of signals or an identifier of a first signal, and the first signal is a signal having a smallest first-path delay in the plurality of signals.

With reference to the second aspect, in some implementations of the second aspect, the method further includes: determining, based on the measurement information, whether an LOS path exists.

With reference to the second aspect, in some implementations of the second aspect, the method further includes: receiving a random access response feedback, where the random access response feedback includes an index of a synchronization signal block SSB; and the determining, based on the measurement information, whether the LOS path exists includes: determining, based on the identifier of the first signal and the index of the SSB, whether the LOS path exists.

With reference to the second aspect, in some implementations of the second aspect, the method further includes: determining sensing accuracy based on the measurement information.

For technical effects of the method shown in the second aspect and the possible designs of the second aspect, refer to the technical effects in the first aspect and the possible designs of the first aspect.

In addition, for descriptions related to the measurement information in the second aspect, refer to the descriptions about the measurement information in the first aspect. Details are not described herein again.

According to a third aspect, a communication apparatus is provided. The communication apparatus is configured to perform any one of the first aspect and the implementations of the first aspect. Specifically, the communication apparatus includes a processor and a memory. The memory is configured to store a computer program. The processor is configured to invoke the computer program from the memory and run the computer program, so that the communication apparatus performs any one of the first aspect and the implementations of the first aspect.

In an implementation, the communication apparatus is a terminal device. When the communication apparatus is the terminal device, a transceiver unit may be a transceiver or an input/output interface. A processing unit may be at least one processor. Optionally, the transceiver may be a transceiver circuit. Optionally, the input/output interface may be an input/output circuit.

In another implementation, the communication apparatus may be a chip, a chip system, or a circuit in the terminal device. In this case, the transceiver unit may be an input/output interface, an interface circuit, an output circuit, an input circuit, a pin, a related circuit, or the like in the chip, the chip system, or the circuit; and the processing unit may be at least one processor, a processing circuit, a logic circuit, or the like.

According to a fourth aspect, a communication apparatus is provided. The communication apparatus is configured to perform any one of the second aspect and the implementations of the second aspect. Specifically, the communication apparatus includes a processor and a memory. The memory is configured to store a computer program. The processor is configured to invoke the computer program from the memory and run the computer program, so that the network device performs any one of the second aspect and the implementations of the second aspect.

In an implementation, the communication apparatus is a network device. When the communication apparatus is a network device, a transceiver unit may be a transceiver or an input/output interface. A processing unit may be at least one processor. Optionally, the transceiver may be a transceiver circuit. Optionally, the input/output interface may be an input/output circuit.

In another implementation, the communication apparatus may be a chip, a chip system, or a circuit in the network device. In this case, the transceiver unit may be an input/output interface, an interface circuit, an output circuit, an input circuit, a pin, a related circuit, or the like in the chip, the chip system, or the circuit; and the processing unit may be at least one processor, a processing circuit, a logic circuit, or the like.

According to a fifth aspect, a communication apparatus is provided, to implement the method according to the first aspect. The apparatus includes a transceiver unit and a processing unit. The transceiver unit is configured to receive information and send information, and the processing unit is configured to perform an internal processing action.

Specifically, the transceiver unit is configured to receive a plurality of signals. The transceiver unit is further configured to send measurement information, where the measurement information includes information about a first-path delay of at least one of the plurality of signals or an identifier of a first signal, and the first signal is a signal having a smallest first-path delay in the plurality of signals.

With reference to the fifth aspect, in some implementations of the fifth aspect, the processing unit is configured to determine a first-path delay and/or a first-path power of each of the plurality of signals.

For technical effects of the method according to the fifth aspect and the possible designs of the fifth aspect, refer to the technical effects in the first aspect and the possible designs of the first aspect.

In addition, for descriptions related to the measurement information in the fifth aspect, refer to descriptions about the measurement information in the first aspect. Details are not described herein again.

According to a sixth aspect, a communication apparatus is provided, to implement the method according to the second aspect. The apparatus includes a transceiver unit and a processing unit. The transceiver unit is configured to receive information and send information, and the processing unit is configured to perform an internal processing action.

Specifically, the transceiver unit is configured to send a plurality of signals. The transceiver unit is further configured to receive measurement information, where the measurement information includes information about a first-path delay of at least one of the plurality of signals or an identifier of a first signal, and the first signal is a signal having a smallest first-path delay in the plurality of signals.

With reference to the sixth aspect, in some implementations of the sixth aspect, the processing unit is configured to determine, based on the measurement information, whether an LOS path exists.

With reference to the sixth aspect, in some implementations of the sixth aspect, the transceiver unit is further configured to receive a random access response feedback, where the random access response feedback includes an index of a synchronization signal block SSB. That the processing unit determines, based on the measurement information, whether the LOS path exists includes: The processing unit determines based on the identifier of the first signal and the index of the SSB, whether the LOS path exists.

With reference to the sixth aspect, in some implementations of the sixth aspect, the processing unit is further configured to determine sensing accuracy based on the measurement information.

For technical effects of the method according to the sixth aspect and the possible designs of the sixth aspect, refer to the technical effects in the first aspect and the possible designs of the first aspect.

In addition, for descriptions related to the measurement information in the sixth aspect, refer to descriptions about the measurement information in the first aspect. Details are not described herein again.

According to a seventh aspect, a computer-readable storage medium is provided. The computer-readable storage medium stores a computer program, and when the computer program is run, the method according to any one of the implementations of the first aspect and the second aspect is performed.

According to an eighth aspect, a computer program product including instructions is provided. When the computer program product is run, the method according to any one of the implementations of the first aspect and the second aspect is performed.

According to a ninth aspect, a chip or a chip system is provided. The chip includes a processor and a communication interface. The processor reads instructions through the communication interface, to perform the method according to any one of the implementations of the first aspect and the second aspect.

Optionally, in an implementation, the chip further includes a memory. The memory stores a computer program or instructions. The processor is configured to execute the computer program or the instructions stored in the memory. When the computer program or the instructions are executed, the processor is configured to perform the method according to any one of the implementations of the first aspect to the fourth aspect.

According to a tenth aspect, a communication system is provided, including the communication apparatus according to the third aspect and the communication apparatus according to the fourth aspect.

### BRIEF DESCRIPTION OF DRAWINGS

FIG. 1 is a diagram of a communication system to which this application is applicable;
FIG. 2a to FIG. 2f are diagrams of sensing modes;
FIG. 3 is a diagram of integrated sensing and communication;
FIG. 4 is a schematic flowchart of a communication method according to an embodiment of this application;
FIG. 5 is a diagram of a plurality of first signals according to an embodiment of this application;
FIG. 6 is a diagram of a channel impulse response according to an embodiment of this application;
FIG. 7 is a schematic flowchart of another communication method according to an embodiment of this application;
FIG. 8 is a schematic block diagram of a communication apparatus according to an embodiment of this application;
FIG. 9 is a diagram of another communication apparatus according to an embodiment of this application; and
FIG. 10 is a diagram of a chip system according to an embodiment of this application.

### DESCRIPTION OF EMBODIMENTS

For ease of understanding of embodiments of this application, the following several points are described.

First, in this application, "indicate" may include "directly indicate" and "indirectly indicate". When a piece of indication information is described as indicating A, the indication information may directly indicate A or indirectly indicate A, but it does not necessarily mean that the indication information includes A.

Information indicated by the indication information is referred to as to-be-indicated information. In a specific implementation process, there are a plurality of manners of indicating the to-be-indicated information. The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmitting device by sending configuration information to a receiving device. The configuration information may include, but not limited to, one or a combination of at least two of radio resource control (radio resource control, RRC) signaling, media access control (media access control, MAC) layer signaling, and physical layer signaling. The MAC layer signaling includes, for example, a MAC control element (control element, CE), and the physical layer signaling includes, for example, downlink control information (downlink control information, DCI).

Second, "at least one" shown in this application means one or more, and "a plurality of" means two or more. In addition, in embodiments of this application, "first", "second", and various numeric numbers (for example, "#1" and "#2") are merely used for differentiation for ease of description, and are not used to limit the scope of embodiments of this application. The sequence numbers in the following processes do not mean execution sequences. The execution sequences of the processes should be determined based on functions and internal logic of the processes, and should not be construed as any limitation on implementation processes of embodiments of this application. It should be understood that, objects described in this way may be interchangeable in proper cases, so that solutions other than embodiments of this application can be described. In addition, in embodiments of this application, words such as "S410" and "S420" are merely identifiers for ease of description, and do not limit a sequence of performing steps.

Third, in this application, a term like "example" or "for example" represents giving an example, an illustration, or a description. Any embodiment or design solution described as an "example" or "for example" in this application should not be explained as being more preferred or having more advantages than another embodiment or design solution. To be precise, use of the term like "example" or "for example" is intended to present a relative concept in a specific manner.

Fourth, "being stored" in embodiments of this application may mean "being stored in one or more memories". The one or more memories may be separately disposed, or may be integrated into an encoder or a decoder, a processor, or a communication apparatus. Alternatively, a part of the one or more memories may be separately disposed, and a part of the one or more memories are integrated into the decoder, the processor, or the communication apparatus. A type of the memory may be a storage medium in any form. This is not limited in this application.

Fifth, a "protocol" in embodiments of this application may be a standard protocol in the communication field, for example, may include an LTE protocol, an NR protocol, and a related protocol applied to a future communication system. This is not limited in this application.

Sixth, in embodiments of this application, "in a case of", "when", and "if' may be used interchangeably sometimes. It should be noted that, when a difference between the three is not emphasized, meanings to be expressed are consistent.

Seventh, in embodiments of this application, terms and English acronyms and abbreviations, such as radio resource control (RRC), are all examples provided for ease of description, and should not constitute any limitation on this application. This application does not exclude a possibility of defining, in an existing or a future protocol, another term that can implement a same or similar function.

Eighth, the term "and/or" in this specification is merely an association relationship for describing associated objects, and indicates that three relationships may exist. For example, A and/or B may indicate the following three cases: Only A exists, both A and B exist, and only B exists. In addition, the character "/" in this specification generally indicates an "or" relationship between the associated objects.

The following describes technical solutions in embodiments of this application in detail with reference to the accompanying drawings.

The technical solutions in embodiments of this application may be applied to various communication systems, for example, a 5th generation (5th generation, 5G) system or a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions in embodiments of this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

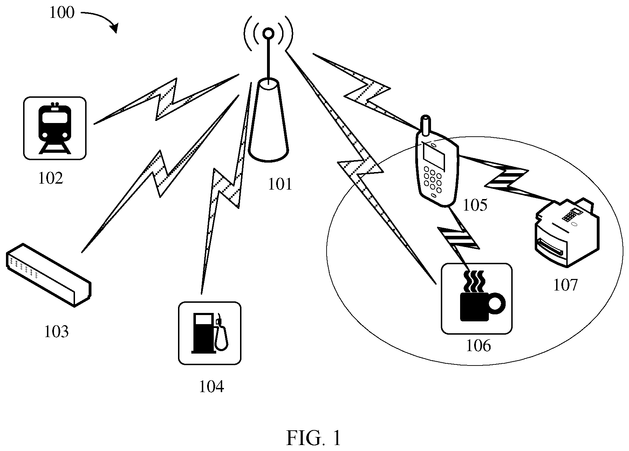

For ease of understanding embodiments of this application, for example, a communication system applicable to this application is first described with reference to FIG. 1.

A terminal device (terminal equipment) in embodiments of this application may be an access terminal, a subscriber unit, a subscriber station, a mobile station, a relay station, a remote station, a remote terminal, a mobile device, a user terminal (user terminal), user equipment (user equipment, UE), a terminal (terminal), a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device, another processing device connected to a wireless modem, a vehicle-mounted device, a wearable device, a terminal device in a 5G network, a terminal device in a future evolved public land mobile communication network (public land mobile network, PLMN), a terminal device in a future internet of vehicles, or the like. This is not limited in embodiments of this application.

For example, in embodiments of this application, the wearable device may also be referred to as a wearable intelligent device or the like, and is a collective term of wearable devices that are intelligently designed and developed for daily wear by using a wearable technology, such as glasses, gloves, watches, clothing, and shoes. The wearable device is a portable device that is directly worn on a body or integrated into clothes or an accessory of a user. The wearable device is not only a hardware device, but also implements a powerful function through software support, data exchange, and cloud interaction. In a broad sense, the wearable intelligent device includes a full-featured device that may implement complete or partial functions without depending on a smartphone, for example, a smartwatch or smart glasses. In addition, the device may alternatively be a portable device that is dedicated to only one type of application function and needs to be used together with another device such as a smartphone, for example, various smart bands or smart jewelry for monitoring physical signs.

In addition, in embodiments of this application, the terminal device may alternatively be a terminal device in an IoT system. IoT is an important part in future development of an information technology. A main technical feature of the IoT is to connect things to a network by using a communication technology, to implement an intelligent network for human-machine interconnection and thing-thing interconnection. In embodiments of this application, an IoT technology can implement massive connections, deep coverage, and terminal power saving by using, for example, a narrow band (narrow band, NB) technology.

In addition, in embodiments of this application, the terminal device may alternatively include a sensor. Main functions include collecting data (some terminal devices), receiving control information and downlink data from a network device, sending an electromagnetic wave, and transmitting uplink data to the network device.

A network device in embodiments of this application is a communication device having a wireless transceiver function. The network device may be an apparatus that is in a radio access network (radio access network, RAN) and that provides a wireless communication function for the terminal device, and is referred to as a RAN device. The device includes but is not limited to: a base station (base station), an evolved NodeB (evolved NodeB, eNB), a radio network controller (radio network controller, RNC), a NodeB (NodeB, NB), a home evolved NodeB (home evolved NodeB, HeNB, or home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), or a transmission and reception point (transmission and reception point, TRP), or the like, and may alternatively be a 5G system, for example, a next generation NodeB (next generation NodeB, gNB) or a transmission point (TRP or TP) in an NR system, one or a group of antenna panels (including a plurality of antenna panels) of a base station in a 5G system, or a network node that forms a gNB or a transmission point, for example, a baseband unit (BBU) or a distributed unit (distributed unit, DU).

In some deployments, the network device may include a central unit (central unit, CU), a DU, and a radio unit (radio unit, RU). The CU may include a CU control plane (control plane, CP) and a CU user plane (user plane, UP). The RU may be a combination of some physical layer processing functions of the BBU and a remote radio unit (remote radio unit, RRU). In different systems, the CU (or the CU-CP and the CU-UP), the DU, or the RU may also have different names, but a person skilled in the art may understand meanings thereof. For example, the radio access network may also be an open radio access network (open radio access network, O-RAN) architecture. In an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented by using a software module, a hardware module, or a combination of a software module and a hardware module.

The network device and the terminal device may be deployed on land, including an indoor or outdoor device, a handheld device, or a vehicle-mounted device; may be deployed on a water surface; or may be deployed on an airplane, a balloon, and a satellite in air. A scenario in which the network device and the terminal device are located is not limited in embodiments of this application.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more of computer operating systems that implement service processing through a process (process), for example, a Linux^{®} operating system, a Unix^{®} operating system, an Android^{®} operating system, an iOS^{®} operating system, or a Windows^{®} operating system. The application layer includes applications such as a browser, an address book, word processing software, and instant messaging software.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, a computer-readable medium includes but is not limited to a magnetic storage component (for example, a hard disk drive, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable storage medium" may include but is not limited to a radio channel, and various other media that can store, include, and/or carry instructions and/or data.

For ease of understanding embodiments of this application, a communication system shown in FIG. 1 is first used as an example to describe in detail a communication system applicable to embodiments of this application. As shown in FIG. 1, the communication system 100 may include at least one network device 101 and at least one of terminal devices 102 to 107. The terminal devices 102 to 107 may be mobile or fixed. The network device 101 may communicate with one or more of the terminal devices 102 to 107 through a radio link. Each network device may provide communication coverage for a particular geographical area, and may communicate with a terminal device located in the coverage area.

Optionally, the terminal devices may directly communicate with each other. For example, direct communication between the terminal devices may be implemented by using a device-to-device (device-to-device, D2D) technology and the like. As shown in FIG. 1, direct communication may be implemented between the terminal devices 105 and 106 and between the terminal devices 105 and 107 by using the D2D technology. The terminal device 106 and the terminal device 107 may separately or simultaneously communicate with the terminal device 105.

Alternatively, the terminal devices 105 to 107 may separately communicate with the network device 101. For example, the terminal devices 105 to 107 may directly communicate with the network device 101. For example, the terminal devices 105 and 106 in the figure may directly communicate with the network device 101. Alternatively, the terminal devices 105 to 107 may indirectly communicate with the network device 101. For example, the terminal device 107 in FIG. 1 communicates with the network device 101 via the terminal device 105.

A plurality of antennas may be configured for each communication device. For each communication device in the communication system 100, the plurality of antennas configured may include at least one transmit antenna configured to send a signal and at least one receive antenna configured to receive a signal. Therefore, the communication devices in the communication system 100 may communicate with each other by using a multi-antenna technology.

An interface between the network device and the terminal device may be a Uu interface (or referred to as an air interface). Certainly, in future communication, names of these interfaces may remain unchanged, or may alternatively be other names. This is not limited in this application. For example, communication between the network device and the terminal device complies with a specific protocol layer structure. Network layering means that work of network nodes (for example, the network device and the terminal device) such as sending, forwarding, packaging, or unpacking data, and loading or unpacking control information is implemented by different hardware and software modules. In this way, a complex problem of communication and network interconnection can be simplified.

It should be understood that FIG. 1 is merely a simplified diagram of an example for ease of understanding. The communication system 100 may further include another network device or may further include another terminal device (not shown in FIG. 1). For example, the communication system 100 may further include a core network device. An access network device provides a radio access connection for the terminal device, and may send data to the terminal device or receive data sent by the terminal device. In addition, the access network device is also connected to the core network device, and may forward, to a core network, the data received from the terminal device, or receive, from the core network, data that needs to be sent to the terminal device.

For example, the communication system 100 may further include an application function (application function, AF) network element. The AF network element is a control plane network function provided by a carrier network, and is configured to provide application layer information. The communication system 100 may further include a session management function (session management function, SMF) network element. The SMF is a control plane network function provided by the carrier network. In this embodiment of this application, when the communication system 100 includes the AF network element and the SMF network element, the AF may send service-related information to the network device by using the SMF.

For ease of understanding embodiments of this application, some basic concepts in this application are briefly described.
1. Sensing may also be referred to as detection. To be specific, parameters of a target in a physical environment, for example, a location of the target and a velocity of the target are detected. It may be understood that a detection system may detect the target by sending sensing information and analyzing an echo signal obtained through reflection by an object.
2. A sensing signal is a signal used for sensing (or detecting) a sensed target (or referred to as a target object). The sensing signal is also referred to as a detection signal, a linear frequency modulation signal, a radar signal, a radar sensing signal, a radar detection signal, an environment sensing signal, or the like.

The sensing signal may be a pulse signal, or may be a signal in a wireless communication system. For example, the sensing signal may be an orthogonal frequency division multiplexing (orthogonal frequency division multiplexing, OFDM) signal obtained by modulating a specific sequence on a subcarrier. The specific sequence may be any one of the following sequences: a Zadoff-Chu sequence (a ZC sequence for short), a pseudo-random sequence, a predefined sequence, and the like. The pseudo-random sequence includes but is not limited to a maximum length linear feedback shift register sequence (an m sequence for short), a Gold sequence, and the like. The predefined sequence includes but is not limited to a random data symbol. For example, the predefined sequence may be a random data symbol modulated in a manner such as quadrature phase shift keying (quadrature phase shift keying, QPSK) or 16 quadrature amplitude modulation (quadrature amplitude modulation, QAM).

3. An echo signal is a signal generated by reflecting a sensing signal by a target object. For example, a delay of the echo signal relative to the sensing signal may reflect a distance from the target object to a transmitter. Alternatively, a Doppler frequency shift of the echo signal relative to the sensing signal may reflect a velocity of the target object.

4. A communication signal is a signal transmitted between communication devices for communication, and includes, for example, a signal transmitted between a network device and a terminal device. For example, the communication signal is a signal carried on a physical downlink shared channel (physical downlink shared channel, PDSCH).

5. Coherent processing time refers to a time period that is much longer than a sending periodicity of a sensing signal. In the coherent processing time, a transmitting end sends a sensing signal a plurality of times in a same beam direction, and a receiving end receives an echo signal of the sensing signal, and performs coherent accumulation on all echo signals received in the time period, to implement ranging and velocity measurement for sensing. The coherent accumulation may be generally implemented by performing matched filtering and Fourier transform on all the echo signals in the time period.

6. A time unit is a time domain unit, and may be divided into at least one time unit in time domain. The time unit in this application is understood as a time domain granularity, and includes but is not limited to a subframe, a slot, a symbol, or the like. A subframe is a time unit in a communication system. A subframe length in a 3G communication system is 2 ms, and a subframe length in a 4G or 5G communication system is 1 ms.

7. An integrated sensing and communication signal may also be referred to as an ISAC signal, and indicates a signal that can be used for both communication and sensing. The signal used for communication may be understood as that the signal carries communication data or a communication reference signal sequence that needs to be transmitted between communication devices.

8. Integrated sensing and communication aims to integrate two functions of wireless communication and sensing into a same system, and implements sensing functions such as positioning, detection, imaging, and identification of a target by using various propagation characteristics of radio signals, to obtain surrounding physical environment information, explore a communication capability, and improve user experience.

For example, a first device sends a sensing signal, and a second device (or the first device) receives an echo signal obtained by reflecting the sensing signal by a target in an environment, to perform sensing. A delay of the echo signal relative to the sent sensing signal reflects a distance from the target, and a Doppler frequency shift of the echo signal relative to the sent sensing signal reflects a velocity of the target.

For example, according to different sensing signal senders and receivers, sensing modes may be classified into two types: monostatic sensing and bistatic sensing. The monostatic sensing means that a device that sends a sensing signal and a device that receives an echo signal obtained by reflecting the sensing signal by the target are a same device. The bistatic sensing means that a device that sends a sensing signal and a device that receives an echo signal obtained by reflecting the sensing signal by the target are different devices.

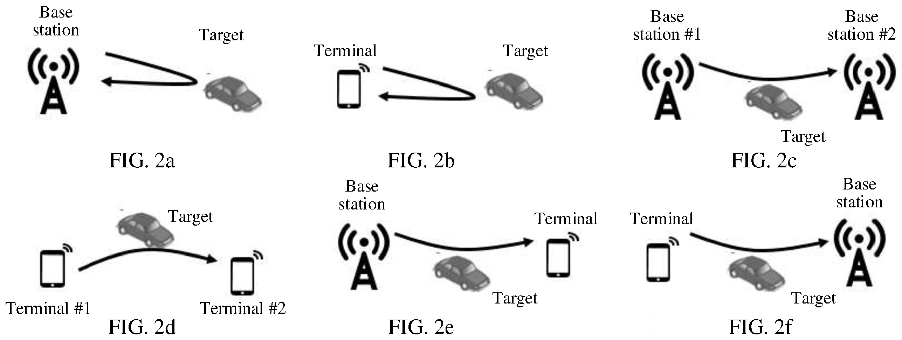

For ease of understanding, the following briefly describes the sensing modes with reference to FIG. 2a to FIG. 2f.

FIG. 2a shows a sensing mode in which a base station performs self-transmission and self-reception, where this mode is the monostatic sensing. FIG. 2b shows a sensing mode in which a terminal performs self-transmission and self-reception, where this mode is the monostatic sensing. FIG. 2c shows that a base station #1 sends a sensing signal, and a base station #2 receives an echo signal, where this mode is the bistatic sensing. FIG. 2d shows that a terminal #1 sends a sensing signal, and a terminal #2 receives an echo signal, where this mode is the bistatic sensing. FIG. 2e shows that a base station sends a sensing signal, and a terminal receives an echo signal, where this mode is the bistatic sensing. FIG. 2f shows that a terminal sends a sensing signal, and a base station receives an echo signal, where this mode is the bistatic sensing.

It should be understood that FIG. 2a to FIG. 2f merely show examples of possible manners of the sensing modes, and do not constitute any limitation on the protection scope of this application.

9. Line of sight (line of sight, LOS) path or non-line of sight (non-line of sight, NLOS) path: A manner of propagating electromagnetic waves along a straight line is referred to as line of sight (that is, LOS) propagation. In addition, the electromagnetic waves reach a receiving end through reflection, scattering, and diffraction, where this manner is referred to as non-line of sight (that is, NLOS) propagation. Generally, propagation conditions of a wireless communication system are classified into two conditions: line of sight (LOS) and non-line of sight (NLOS). In the line of sight condition, radio signals are propagated along a straight line between a transmitting end and the receiving end without obstacles. If there are obstacles, the radio signals are propagated between the transmitting end and the receiving end through reflection, scattering, and diffraction.

10. Sensing-assisted communication: A network device may enhance performance of communication with a terminal device by using sensed target information, where this manner is referred to as sensing-assisted communication. For example, the network device may predict a location of the terminal device in a next time period by using a location and a velocity of the terminal device that are sensed. In this case, the network device no longer needs to send a reference signal to the terminal device in the next time period to measure communication quality of different beams, and may directly select an optimal beam to communicate with the terminal device, thereby reducing overheads for sending the reference signal and increasing a communication capacity.

11. Channel state information (channel state information, CSI) report: In an NR communication system, related indicators of channel state information reported by a terminal include related parameters such as a channel quality indicator (channel quality indicator, CQI), a precoding matrix indicator (precoding matrix indicator, PMI), a CSI reference signal (CSI reference signal, CSI-RS) resource indicator (CSI-RS resource indicator, CRI), a synchronization signal (synchronization signal, SS) and physical broadcast channel (physical broadcast channel, PBCH) block (SS/PBCH Block) resource indicator (SS/PBCH block resource indicator, SSBRI), a layer indicator (layer indicator, LI), a rank indicator (rank indicator, RI), a layer 1-reference signal received power (layer 1-reference signal received power, L1-RSRP), or a layer 1-signal to interference plus noise ratio (layer 1-signal to interference plus noise ratio, L1-SINR).

12. A target may be any tangible object that can reflect an electromagnetic wave in an environment, for example, a ground object like a mountain, a forest, or a building, or may include a movable object like a vehicle, an uncrewed aerial vehicle, a pedestrian, or a terminal device. The target may also be referred to as a sensed target, a detected target, a sensed object, a detected object, a sensed device, or the like. This is not limited in embodiments of this application.

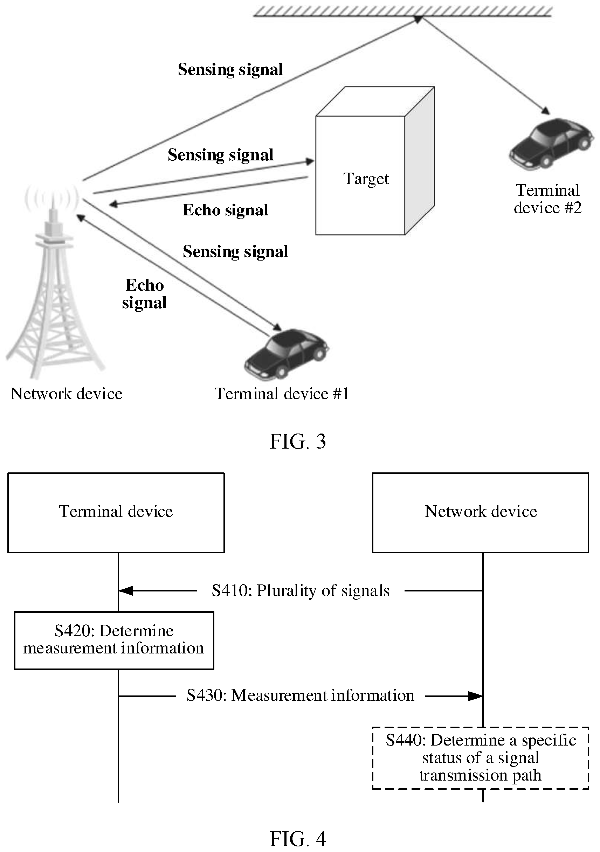

The foregoing describes basic concepts that may be used in embodiments of this application, and describes the integrated sensing and communication in the basic concepts. A solution of the integrated sensing and communication is as follows. A base station senses information such as a location and a velocity of a target in an environment by sending a sensing signal and receiving an echo signal obtained through reflection by the target in the environment, as shown in FIG. 3. The target in the environment may be an object (which has no communication connection to the base station, for example, the target in FIG. 3) in the environment, or may be a terminal device (which has a communication connection to the base station, for example, a terminal device #1 and a terminal device #2 in FIG. 3).

When sensing the target in the environment, the base station generally can sense only a target in a line of sight (that is, LOS) condition with the base station, for example, the environment target and the terminal device #1 in FIG. 3. However, for a target (for example, the terminal device #2 in FIG. 3) in a non-line of sight (that is, NLOS) condition with the base station, the base station generally cannot sense the target. This is because a sensing signal sent by the base station needs to be reflected a plurality of times before a corresponding echo signal is received, and the received echo signal undergoes a two-way path loss (round-trip). The signal loss is large, signal strength is weak, and the base station generally cannot detect the signal. A terminal device in a non-line of sight (that is, NLOS) condition (where no LOS path exists, and only an NLOS path exists) with the base station may also communicate with the base station. This is because a communication link has only one way, and a path loss is less than that in sensing. Therefore, the terminal device having only the NLOS path may also communicate with the base station.

It should be understood that the network device cannot determine, based on an existing channel state information measurement result reported by the terminal device, whether a radio signal between the terminal device and the network device is transmitted along a straight line between the network device and the terminal device without obstacles. As a result, the network device cannot determine whether sensing information can be used to enhance performance of communication with the terminal device.

To resolve the problem, in the foregoing solution of the integrated sensing and communication, that the network device cannot determine whether the sensing information can be used to enhance the performance of communication with the terminal device, this application provides a communication method: The terminal device measures a signal sent by the network device, and reports a measurement result, so that the network device can determine a status of a communication signal transmission path between the terminal device and the network device, and the network device determines whether the sensing information can be used to enhance the performance of communication with the terminal device.

It should be understood that the communication method provided in embodiments of this application may be applied to a system in which communication is performed by using a multi-antenna technology, for example, the communication system 100 shown in FIG. 1. The communication system may include at least one network device and at least one terminal device.

For example, the communication method provided in embodiments of this application may be applied to the monostatic sensing scenario in which the network device performs self-transmission and self-reception shown in FIG. 2a. For example, the network device transmits a sensing signal or an integrated sensing and communication signal, and the network device receives an echo signal generated by reflecting the sensing signal or the integrated sensing and communication signal by a target in an environment, to sense information such as a location and a velocity of the target.

When sending the integrated sensing and communication signal for sensing, the network device includes, in the integrated sensing and communication signal, communication data or a communication reference signal sequence that needs to be transmitted by the network device to the terminal device. When sending the sensing signal, the network device may simultaneously send, in a manner such as frequency division multiplexing or space division multiplexing, a communication signal to communicate with the terminal device.

It should be noted that a target device in the environment and the terminal device may be a same device, or may be different devices.

It should further be understood that a specific structure of an execution entity of the method provided in embodiments of this application is not specifically limited in embodiments shown below, provided that a program that records code for the method provided in embodiments of this application can be run to perform communication according to the method provided in embodiments of this application. For example, the method provided in embodiments of this application may be performed by a terminal device, or may be performed by a functional module that is in the terminal device and that can invoke a program and execute the program.

FIG. 4 is a schematic flowchart of a communication method according to an embodiment of this application. The method includes the following steps.

S410: Send a plurality of signals.

In this embodiment, sending the plurality of signals is also equivalent to outputting the plurality of signals. For example, the following two possibilities may be included.

Possibility 1: A network device sends the plurality of signals to a terminal device.

Possibility 2: After generating the plurality of signals, a baseband chip or a processor of a network device may output the plurality of signals to a radio frequency unit of the network device. Further, the radio frequency unit may send the plurality of signals to a terminal device.

Correspondingly, the terminal device receives the plurality of signals from the network device.

Specifically, the network device sends M signals to the terminal device on resources, and correspondingly, the terminal device receives the M signals from the network device, where M is an integer greater than 1.

For example, the network device may send the M signals to the terminal device on a plurality of resources, and the terminal device may also receive the M signals on the plurality of resources. The resource in this embodiment may be a time-frequency resource. Specifically, the time-frequency resource includes a time domain resource and a frequency domain resource. For example, the resource in this embodiment includes a time unit (for example, a symbol, a slot, or a subframe) in time domain and a frequency domain unit (for example, a subcarrier) in frequency domain. It should be understood that a specific definition of the resource is not limited in this embodiment. For details, refer to descriptions of a resource carrying a signal between a network device and a terminal device in a current related technology. Details are not described herein.

Specifically, one signal may be transmitted on one resource. Specifically, different signals may be transmitted on a plurality of resources, or a same signal may be transmitted on a plurality of resources. For example, the M signals are sent on M resources. The M signals may be different from each other, may be partially the same, or may be completely the same. That the signals are the same may be understood as that the signals carry the same data, signaling, sequence, or the like.

For example, if the network device sends a signal #1 on a resource #1, sends a signal #2 on a resource #2, and sends a signal #3 on a resource #3, the terminal device receives the signal #1 on the resource #1, receives the signal #2 on the resource #2, and receives the signal #3 on the resource #3.

For another example, if the network device sends a signal #1 on a resource #1 and sends a signal #2 on a resource #2, the terminal device receives the signal #1 on the resource #1 and receives the signal #2 on the resource #2. The signal #1 and the signal #2 are the same. For example, the signal #1 and the signal #2 carry the same data, signaling, or sequence.

For example, each of the M signals is associated with one identifier.

For example, in the M signals, the signal #1 is associated with an identifier #1, and the signal #2 is associated with an identifier #2. The signal #1 and the signal #2 are the same or different.

For another example, in the M signals, the signal #1 is associated with an identifier #1, and the signal #2 and the signal #3 are associated with an identifier #2.

For example, at least one of the plurality of resources used for carrying the M signals is associated with one identifier. In other words, an identifier identifies at least one of the plurality of resources. The plurality of resources used for carrying the M signals may belong to one resource set.

For example, the resource #1 is associated with the identifier #1, and the resource #2 is associated with the identifier #2. Optionally, the resource #1 carries the signal #1, the resource #2 carries the signal #2, and the signal #1 and the signal #2 are the same or different.

For another example, the resource #1 is associated with the identifier #1, and the resource #2 and the resource #3 are associated with the identifier #2. Optionally, the resource #1 carries the signal #1, the resource #2 carries the signal #2, and the resource #3 carries the signal #3.

For example, at least one of a plurality of beams used for sending the M signals is associated with one identifier. In other words, an identifier identifies at least one of the plurality of beams.

For example, a beam #1 is associated with the identifier #1, and a beam #2 is associated with the identifier #1. Optionally, the beam #1 is used for sending the signal #1, the beam #2 is used for sending the signal #2, and the signal #1 and the signal #2 are the same or different.

For another example, a beam #1 is associated with the identifier #1, and a beam #2 and a beam #3 are associated with the identifier #2. Optionally, the beam #1 is used for sending the signal #1, the beam #2 is used for sending the signal #2, and the beam #3 is used for sending the signal #3.

By way of example but not limitation, signals in the M signals may be sent by using different beams.

For example, the M signals include a signal #1 and a signal #2, the signal #1 is sent by using a beam #1, the signal #2 is sent by using a beam #2, and a direction of the beam #1 is different from a direction of the beam #2.

For another example, the M signals include a signal #1, a signal #2, and a signal #3. The signal #1 is sent by using a beam #1, the signal #2 and the signal #3 are sent by using a beam #2, and a direction of the beam #1 is different from a direction of the beam #2.

By way of example but not limitation, signals on different resources may be sent by using different beams.

For example, a signal #1 carried on a resource #1 is sent by using a beam #1, a signal #2 carried on a resource #2 is sent by using a beam #2, and a direction of the beam #1 is different from a direction of the beam #2. The signal #1 and the signal #2 may be the same or different.

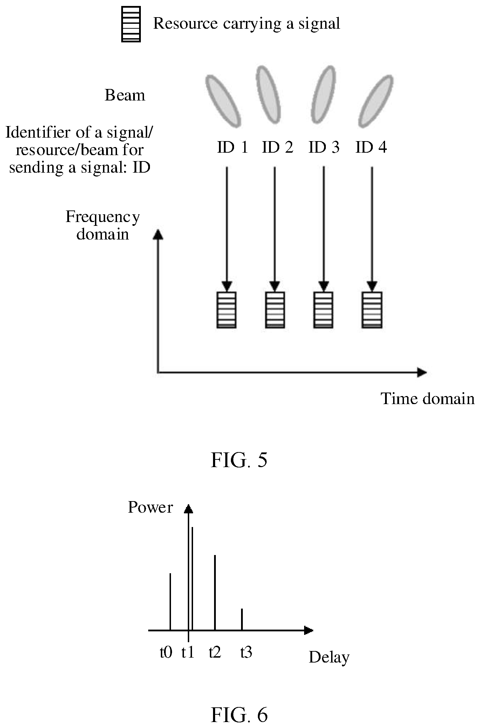

For ease of understanding, the following describes, with reference to FIG. 5, manners in which the network device sends the M signals.

As shown in FIG. 5, the network device respectively sends four signals on four resources, where identifiers (identifiers, IDs) associated with the four signals are 1, 2, 3, and 4 respectively, and signals associated with different identifiers are sent by using different beams. As shown in FIG. 5, the four signals are sent in different beam directions.

It can be learned from FIG. 5 that the network device includes the four signals on the four resources respectively, and the four signals are sent by using four beams. For example, the four resources are a resource #1, a resource #2, a resource #3, and a resource #4 respectively, the four signals are a signal #1, a signal #2, a signal #3, and a signal #4 respectively, the four beams are a beam #1, a beam #2, a beam #3, and a beam #4 respectively, and the four identifiers are 1, 2, 3, and 4 respectively.

The ID 1 is associated with the signal #1, the ID 2 is associated with the signal #2, the ID 3 is associated with the signal #3, and the ID 4 is associated with the signal #4. The ID 1 is associated with the resource #1, the ID 2 is associated with the resource #2, the ID 3 is associated with the resource #3, and the ID 4 is associated with the resource #4. The ID 1 is associated with the beam #1, the ID 2 is associated with the beam #2, the ID 3 is associated with the beam #3, and the ID 4 is associated with the beam #4. That is, the ID 1 may be an identifier of the signal #1, the resource #1, or the beam #1; the ID 2 may be an identifier of the signal #2, the resource #2, or the beam #2; the ID 3 may be an identifier of the signal #3, the resource #3, or the beam #3; and the ID 4 may be an identifier of the signal #4, the resource #4, or the beam #4.

It should be noted that FIG. 5 is merely an example, and does not constitute any limitation on the protection scope of this application. For example, a quantity of signals sent by the network device may not be 4.

For example, the identifier may also be referred to as an index value. In other words, each of the M signals is associated with one index value, index values associated with different signals may be the same or may be different, and signals associated with different index values are sent by using different beams. In addition, the beam may also be referred to as a spatial transmission filter (spatial transmission filter), a spatial filter (spatial filter), or a space domain filter (space domain filter).

For example, before sending the M signals, the network device may send first information to the terminal device, where the first information is configuration information of the plurality of resources.

In a possible implementation, the first information indicates at least one of time-frequency domain resource locations of the resources, a sequence used by signals carried on the resources, and IDs of the resources. Correspondingly, the terminal device receives the first information sent by the network device, and determines the configuration information of the resources, so that the terminal device receives the signals on the plurality of resources.

Optionally, the signal is an SSB or a CSI-RS.

For example, when the foregoing signal is the CSI-RS, a resource occupied by the CSI-RS needs to be indicated by the first information. For another example, when the foregoing signal is the SSB, because a configuration of a resource carrying the SSB is predefined in a protocol, the resource occupied by the SSB does not need to be indicated by the first information.

Further, in this embodiment, after receiving the plurality of signals, the terminal device may perform measurement based on the plurality of signals to obtain feedback information. The method procedure shown in FIG. 4 further includes the following step.

S420: The terminal device determines measurement information.

In this embodiment, the measurement information determined by the terminal device can be used for determining whether sensing information is used for assisting in communication. For example, it may be determined, based on the measurement information, whether an LOS path exists between the terminal device and the network device, so as to determine whether the sensing information of the terminal device can be used to enhance performance of communication with the terminal device.

Specifically, for the received M signals, the terminal device may calculate channel impulse responses by using the received signals, to determine a first-path delay and/or a first-path power of each signal, as shown in FIG. 6. The channel impulse response may reflect a delay and a power of the received signal in each path, that is, a delay and an amplitude of each path in a transmission environment between the network device and the terminal device. A path with a smallest delay is a first path of the signal, the first-path delay is a transmission delay of the signal on the first path, and the first-path power is a signal transmission power on the first path.

For example, a channel impulse response calculated by using a received signal is shown in FIG. 6. It can be learned from FIG. 6 that the signal sent by the network device passes through four propagation paths, and delays of the paths are t0, t1, t2, and t3 respectively. If t0 is the smallest in t0, t1, t2, and t3, t0 is a first-path delay of the signal.

Optionally, a method for calculating the channel impulse response by the terminal device is as follows: The terminal device divides, per resource element, a frequency domain sequence received on a resource by a sequence of signals sent by the network device, and performs inverse Fourier transform on a result to obtain the channel impulse response.

In a possible implementation (briefly referred to as an implementation #1 below), the measurement information includes an identifier of a first signal, and the first signal is a signal having a smallest first-path delay in the plurality of signals. The identifier of the first signal may be an identifier of a resource carrying the first signal, or the identifier of the first signal may be an identifier of a beam for sending the first signal.

Specifically, in the case shown in the implementation #1, after receiving the M signals, the terminal device determines a first-path delay of each of the M signals, and determines a total of M first-path delays. In addition, the terminal device determines to report, to the network device, an identifier of a signal corresponding to a smallest first-path delay in the M first-path delays, where a first-path delay of the first signal is the smallest first-path delay in the M first-path delays.

For ease of understanding, the following describes, with reference to a specific example, a manner of determining the measurement information in the case shown in the implementation #1.

### Example 1

As shown in FIG. 5, the terminal device receives the four signals on the four resources (for example, receives the signal #1 on the resource #1, receives the signal #2 on the resource #2, receives the signal #3 on the resource #3, and receives the signal #4 on the resource #4, where the signal #1 is sent by using the beam #1, the signal #2 is sent by using the beam #2, the signal #3 is sent by using the beam #3, and the signal #4 is sent by using the beam #4).

First, the terminal device may calculate a channel impulse response #1 based on the signal #1 received on the resource #1, to obtain a delay and a power of each propagation path that the signal #1 passes through, where a first-path delay of the signal #1 is denoted as k1. The terminal device may calculate a channel impulse response #2 based on the signal #2 received on the resource #2, to obtain a delay and a power of each propagation path that the signal #2 passes through, where a first-path delay of the signal #2 is denoted as k2. The terminal device may calculate a channel impulse response #3 based on the signal #3 received on the resource #3, to obtain a delay and a power of each propagation path that the signal #3 passes through, where a first-path delay of the signal #3 is denoted as k3. The terminal device may calculate a channel impulse response #4 based on the signal #4 received on the resource #4, to obtain a delay and a power of each propagation path that the signal #4 passes through, where a first-path delay of the signal #4 is denoted as k4.

Then, the terminal device obtains a smallest one of the four first-path delays (for example, k1, k2, k3, and k4) through calculation, and determines an identifier of a signal corresponding to the smallest first-path delay as an identifier that needs to be reported. For example, if k1 is the smallest one of k1, k2, k3, and k4, the identifier that needs to be reported may be an identifier of the signal #1, or may be an identifier of the resource #1 carrying the signal #1, or may be an identifier of the beam #1 for sending the signal #1.

Optionally, the identifier identifying the signal #1 is associated with the resource #1 carrying the signal #1.

Optionally, the identifier identifying the signal #1 is associated with the beam #1 for sending the signal #1.

For ease of description, an example in which the reported identifier is the identifier of the signal #1 is used below for description.

Optionally, when a plurality of first-path delays are the same, the plurality of first-path delays respectively correspond to a plurality of signals, and the plurality of signals have a plurality of first-path powers. The terminal device uses, as an identifier that needs to be reported, an identifier of a signal corresponding to a highest first-path power in the plurality of first-path powers. For example, if k1 and k2 are the same, k1 and k2 are the smallest in k1, k2, k3, and k4, and a first-path power of the signal #1 is greater than a first-path power of the signal #2, the identifier that needs to be reported may be the identifier of the signal #1, may be the identifier of the resource #1 carrying the signal #1, or may be the identifier of the beam #1 for sending the signal #1.

For example, in the case shown in the implementation #1, the measurement information may further include information about the first-path delay and/or a first-path power of the first signal.

By way of example but not limitation, information about a first-path delay corresponding to a signal may indicate one of N first-path delays, where N is an integer greater than 1. The signal may be any one of the M signals, for example, the foregoing first signal, or at least one signal in the following implementation #2. In addition, the N first-path delays may be four first-path delays in Table 1 below. For example, a first-path delay less than or equal to 0 in Table 1 is a type of first-path delay, a first-path delay greater than 0 and less than 30 ns in Table 1 is another type of first-path delay, a first-path delay greater than or equal to 30 ns and less than 100 ns in Table 1 is still another type of first-path delay, and a first-path delay greater than or equal to 100 ns in Table 1 is still another type of first-path delay.

Optionally, the N first-path delays include a first first-path delay, and the first first-path delay is a first-path delay less than 0 or equal to 0.

For ease of understanding, the following describes a correspondence between information about a first-path delay and the first-path delay with reference to a specific example.

### Example 2

For example, information about a first-path delay is a bits, and information about a first-path power is b bits, where both a and b are integers greater than 1.

For example, the information about the first-path delay is 2 bits, and a correspondence between the first-path delay and values of the 2 bits is shown in Table 1 below.

**Table 1 Table of a correspondence between first-path delay and information about the first-path delay**

| Values of 2 bits | First-path delay |
|---|---|
| 00 | First-path delay less than or equal to 0 |
| 01 | First-path delay greater than 0 and less than 30 ns (nanoseconds) |
| 10 | First-path delay greater than or equal to 30 ns and less than 100 ns |
| 11 | First-path delay greater than or equal to 100 ns |

By way of example but not limitation, information about a first-path power corresponding to a signal may indicate one of Q first-path powers, where Q is an integer greater than 1_{.} The signal may be any one of the M signals, for example, the foregoing first signal, or at least one signal in the following implementation #2. In addition, the Q first-path powers may be eight first-path powers in Table 2 below. For example, a first-path power less than -144 dBm in Table 2 is a type of first-path power, a first-path power greater than or equal to -144 dBm and less than -140 dBm in Table 2 is another type of first-path power, and a first-path power greater than or equal to -140 dBm and less than -136 dBm in Table 2 is still another type of first-path power.

For ease of understanding, the following describes a correspondence between information about a first-path power and the first-path power with reference to a specific example.

For example, the information about the first-path power is 3 bits, and a correspondence between the first-path power and values of the 3 bits is shown in Table 2 below.

**Table 2 Table of a correspondence between first-path power and information about the first-path power**

| Values of 3 bits | First-path power |
|---|---|
| 000 | First-path power less than -144 dBm |
| 001 | First-path power greater than or equal to -144 dBm and less than -140 dBm |
| 010 | First-path power greater than or equal to -140 dBm and less than -136 dBm |
| 011 | First-path power greater than or equal to -136 dBm and less than -132 dBm |
| 100 | First-path power greater than or equal to -132 dBm and less than -128 dBm |
| 101 | First-path power greater than or equal to -124 dBm and less than -120 dBm |
| 110 | First-path power greater than or equal to -120 dBm and less than -116 dBm |
| 111 | First-path power greater than or equal to -116 dBm and less than -112 dBm |

In the case shown in the implementation #1, the information that may be reported by the terminal device by using the measurement information includes the following several possibilities:
(1) The measurement information includes the identifier of the first signal, and the terminal device may report, by using the measurement information, an identifier of a signal having a smallest first-path delay. For another example, the measurement information includes the identifier of the resource carrying the first signal, and the terminal device may report, by using the measurement information, an identifier of a resource carrying a signal having a smallest first-path delay. For still another example, the measurement information includes the identifier of the beam for sending the first signal, and the terminal device may report, by using the measurement information, an identifier of a beam for sending a signal having a smallest first-path delay. For example, the measurement information includes one field, and the field indicates the identifier of the first signal. For example, if the identifier of the first signal is 1, a value of the field is 1. For another example, the measurement information includes one field, and the field indicates the identifier of the resource carrying the first signal. For example, if the identifier of the resource carrying the first signal is 1, a value of the field is 1. For still another example, the measurement information includes one field, and the field indicates the identifier of the beam for sending the first signal. For example, if the identifier of the beam for carrying the first signal is 1, a value of the field is 1.
(2) The measurement information includes the identifier of the first signal and information about the first-path delay of the first signal, and the terminal device may report, by using the measurement information, an identifier of a signal having a smallest first-path delay and information indicating the first-path delay. For another example, the measurement information includes the identifier of the resource carrying the first signal and information about the first-path delay of the first signal, and the terminal device may report, by using the measurement information, an identifier of a resource carrying a signal having a smallest first-path delay and information indicating the first-path delay. For still another example, the measurement information includes the identifier of the beam for sending the first signal and information about the first-path delay of the first signal, and the terminal device may report, by using the measurement information, an identifier of a beam for sending a signal having a smallest first-path delay and information indicating the first-path delay. For example, the measurement information includes two fields: a field #1 and a field #2. The field #1 indicates the identifier of the first signal, and the field #2 indicates the first-path delay of the first signal. For example, if the identifier of the first signal is 1, a value of the field #1 is 1; and if the first-path delay of the first signal is less than or equal to 0, a value of the field #2 is 00 (refer to Table 1). For another example, the measurement information includes two fields: a field #1 and a field #2. The field #1 indicates the identifier of the resource carrying the first signal, and the field #2 indicates the first-path delay of the first signal. For example, if the identifier of the resource carrying the first signal is 1, a value of the field #1 is 1; and if the first-path delay of the first signal is less than or equal to 0, a value of the field #2 is 00 (refer to Table 1). For still another example, the measurement information includes two fields: a field #1 and a field #2. The field #1 indicates the identifier of the beam for sending the first signal, and the field #2 indicates the first-path delay of the first signal. For example, if the identifier of the beam for sending the first signal is 1, a value of the field #1 is 1; and if the first-path delay of the first signal is less than or equal to 0, a value of the field #2 is 00 (refer to Table 1).
(3) The measurement information includes the identifier of the first signal and information about a first-path power of the first signal, and the terminal device may report, by using the measurement information, an identifier of a signal having a smallest first-path delay and information indicating the first-path power. For another example, the measurement information includes the identifier of the resource carrying the first signal and information about a first-path power of the first signal, and the terminal device may report, by using the measurement information, an identifier of a resource carrying a signal having a smallest first-path power and information indicating the first-path power. For still another example, the measurement information includes the identifier of the beam for sending the first signal and information about a first-path power of the first signal, and the terminal device may report, by using the measurement information, an identifier of a beam for sending a signal having a smallest first-path power and information indicating the first-path delay. For example, the measurement information includes two fields: a field #1 and a field #3. The field #1 indicates the identifier of the first signal, and the field #3 indicates the first-path power of the first signal. For example, if the identifier of the first signal is 1, a value of the field #1 is 1; and if the first-path power of the first signal is less than - 144 dBm, a value of the field #3 is 000 (refer to Table 2). For another example, the measurement information includes two fields: a field #1 and a field #3. The field #1 indicates the identifier of the resource carrying the first signal, and the field #3 indicates the first-path power of the first signal. For example, if the identifier of the resource carrying the first signal is 1, a value of the field #1 is 1; and if the first-path power of the first signal is less than -144 dBm, a value of the field #3 is 000 (refer to Table 2). For another example, the measurement information includes two fields: a field #1 and a field #3. The field #1 indicates the identifier of the beam for sending the first signal, and the field #3 indicates the first-path power of the first signal. For example, if the identifier of the beam for sending the first signal is 1, a value of the field #1 is 1; and if the first-path power of the first signal is less than -144 dBm, a value of the field #3 is 000 (refer to Table 2).
(4) The measurement information includes the identifier of the first signal, information about the first-path delay of the first signal, and information about a first-path power of the first signal, and the terminal device may report, by using the measurement information, an identifier of a signal having a smallest first-path delay, information indicating the first-path delay, and information indicating a first-path power. For another example, the measurement information includes the identifier of the resource carrying the first signal, information about the first-path delay of the first signal, and information about a first-path power of the first signal, and the terminal device may report, by using the measurement information, an identifier of a resource carrying a signal having a smallest first-path power, information indicating a first-path delay, and information indicating the first-path power. For still another example, the measurement information includes the identifier of the beam for sending the first signal, information about the first-path delay of the first signal, and information about a first-path power of the first signal, and the terminal device may report, by using the measurement information, an identifier of a beam for sending a signal having a smallest first-path power, information indicating a first-path delay, and information indicating the first-path power. The identifier identifying the first signal is associated with the resource carrying the signal. In addition, the identifier identifying the first signal is associated with the beam for sending the signal. For example, the measurement information includes three fields: a field #1, a field #2, and a field #3. The field #1 indicates the identifier of the first signal, the field #2 indicates the first-path delay of the first signal, and the field #3 indicates the first-path power of the first signal. For example, if the identifier of the first signal is 1, a value of the field #1 is 1; if the first-path delay of the first signal is less than or equal to 0, a value of the field #2 is 00 (refer to Table 1); and if the first-path power of the first signal is less than -144 dBm, a value of the field #3 is 000 (refer to Table 2). For another example, the measurement information includes three fields: a field #1, a field #2, and a field #3. The field #1 indicates the identifier of the resource carrying the first signal, the field #2 indicates the first-path delay of the first signal, and the field #3 indicates the first-path power of the first signal. For example, if the identifier of the resource carrying the first signal is 1, a value of the field #1 is 1; if the first-path delay of the first signal is less than or equal to 0, a value of the field #2 is 00 (refer to Table 1); and if the first-path power of the first signal is less than -144 dBm, a value of the field #3 is 000 (refer to Table 2). For still another example, the measurement information includes three fields: a field #1, a field #2, and a field #3. The field #1 indicates the identifier of the beam for sending the first signal, the field #2 indicates the first-path delay of the first signal, and the field #3 indicates the first-path power of the first signal. For example, if the identifier of the beam for sending the first signal is 1, a value of the field #1 is 1; if the first-path delay of the first signal is less than or equal to 0, a value of the field #2 is 00 (refer to Table 1); and if the first-path power of the first signal is less than -144 dBm, a value of the field #3 is 000 (refer to Table 2).

In another possible implementation (briefly referred to as an implementation #2 below), the measurement information includes information about a first-path delay of at least one of the plurality of signals.

For example, the terminal device calculates first-path delays and first-path powers of the received M signals. A first-path delay and a first-path power of a signal may be obtained by calculating a channel impulse response. The channel impulse response may reflect a delay and a power of the received signal in each path, that is, a delay and an amplitude of each path in a transmission environment between the network device and the terminal device.

For example, a channel impulse response calculated by using a received signal is shown in FIG. 6. It can be learned from FIG. 6 that a first-path delay is t0, and a first-path power is a power corresponding to a transmission path with a delay of t0.

Optionally, the measurement information includes information about a first-path delay of one of the M signals.

For example, M first-path delays of the M signals are a first-path delay #1, a first-path delay #2, a first-path delay #3, ..., and a first-path delay #M respectively. The measurement information includes information indicating the first-path delay #1. Optionally, the first-path delay #1 satisfies a preset condition (for example, the terminal device determines to report a first-path delay that is less than a preset value, where the preset value is predefined in a protocol or negotiated by the terminal device and a network, and the preset value is not limited in this embodiment).

Optionally, the measurement information includes information about first-path delays of a plurality of the M signals.

For example, M first-path delays of the M signals are a first-path delay #1, a first-path delay #2, a first-path delay #3, ..., and a first-path delay #M respectively. The measurement information includes information indicating the first-path delay #1 and information indicating the first-path delay #2. Optionally, the first-path delay #1 and the first-path delay #2 satisfy a preset condition.

Optionally, the measurement information includes information about first-path delays of the M signals.

For example, M first-path delays of the M signals are a first-path delay #1, a first-path delay #2, a first-path delay #3, ..., and a first-path delay #M respectively. The measurement information includes the first-path delay #1, the first-path delay #2, the first-path delay #3, ..., and the first-path delay #M.

For example, the measurement information may be a list, the list includes at least one element, and an element in the at least one element indicates a first-path delay of a signal in the at least one signal. Each element in the list includes one field, and the field indicates delay information. For example, the measurement information includes two elements: an element #1 and an element #2. The element #1 includes one field, indicating a first-path delay of a signal #1. The element #2 also includes one field, indicating a first-path delay of a signal #2.

Optionally, in the case shown in the implementation #2, the measurement information may further include an identifier of the at least one signal. Specifically, the measurement information includes information about a first-path delay of the at least one signal and the identifier of the at least one signal. In the measurement information, information about a first-path delay of each of the at least one signal is bound to an identifier of the signal, and the identifier of the signal may be an identifier of a resource carrying the signal or an identifier of a beam for sending the signal.

For example, the measurement information includes information about the first-path delay of the signal #1, an identifier of the signal #1, information about the first-path delay of the signal #2, and an identifier of the signal #2.

For another example, the measurement information includes information about the first-path delay of the signal #1, an identifier of a resource carrying the signal #1, information about the first-path delay of the signal #2, an identifier of a resource carrying the signal #2.

For still another example, the measurement information may include information about the first-path delay of the signal #1, an identifier of a beam for sending the signal #1, information about the first-path delay of the signal #2, and an identifier of a beam for sending the signal #2.

For example, the measurement information may be a list, the list includes at least one element, and an element in the at least one element indicates an identifier and a first-path delay of a signal in the at least one signal. Each element in the list includes two fields. One field indicates an identifier, and the other field indicates delay information. For example, the measurement information includes two elements: an element #1 and an element #2. The element #1 includes two fields. One field indicates an identifier of a signal #1, and the other field indicates a first-path delay of the signal #1. The element #2 also includes two fields. One field indicates an identifier of a signal #2, and the other field indicates a first-path delay of the signal #2. For another example, the measurement information includes two elements: an element #1 and an element #2. The element #1 includes two fields. One field indicates an identifier of a resource carrying a signal #1, and the other field indicates a first-path delay of the signal #1. The element #2 also includes two fields. One field indicates an identifier of a resource carrying a signal #2, and the other field indicates a first-path delay of the signal #2. For still another example, the measurement information includes two elements: an element #1 and an element #2. The element #1 includes two fields. One field indicates an identifier of a beam for sending a signal #1, and the other field indicates a first-path delay of the signal #1. The element #2 also includes two fields. One field indicates an identifier of a beam for sending a signal #2, and the other field indicates a first-path delay of the signal #2.

Optionally, in the case shown in the implementation #2, the measurement information may further include information about a first-path power of the at least one signal. Specifically, the measurement information includes the information about the first-path delay of the at least one signal, and the information about the first-path power of the at least one signal. In the measurement information, information about a first-path delay of each of the at least one signal is bound to a first-path power of the signal.

Alternatively, specifically, the measurement information includes the information about the first-path delay of the at least one signal, the information about the first-path power of the at least one signal, and an identifier of the at least one signal. In the measurement information, information about a first-path delay of each of the at least one signal is bound to an identifier and a first-path power of the signal.

For example, the measurement information includes information about the first-path delay of the signal #1, information about a first-path power of the signal #1, information about the first-path delay of the signal #2, and information about a first-path power of the signal #2.

For example, the measurement information may be a list, the list includes at least one element, and an element in the at least one element indicates a first-path power and a first-path delay of a signal in the at least one signal. Each element in the list includes two fields. One field indicates a first-path power, and the other field indicates delay information. For example, the measurement information includes two elements: an element #1 and an element #2. The element #1 includes two fields. One field indicates a first-path power of a signal #1, and the other field indicates a first-path delay of the signal #1. The element #2 also includes two fields. One field indicates a first-path power of a signal #2, and the other field indicates a first-path delay of the signal #2.

For another example, the measurement information includes information about a first-path delay of a signal #1, information about a first-path power of the signal #1, an identifier of the signal #1, information about a first-path delay of a signal #2, information about a first-path power of the signal #2, and an identifier of the signal #2.

For example, the measurement information is a list, the list includes at least one element, and an element in the at least one element indicates an identifier, a first-path power, and a first-path delay of a signal in the at least one signal. Each element in the list includes three fields. One field indicates a first-path power, another field indicates delay information, and the remaining field indicates an identifier. For example, the measurement information includes two elements: an element #1 and an element #2. The element #1 includes three fields. One field indicates a first-path power of a signal #1, another field indicates a first-path delay of the signal #1, and the remaining field indicates an identifier of the signal #1. The element #2 also includes three fields. One field indicates a first-path power of a signal #2, another field indicates a first-path delay of the signal #2, and the remaining field indicates an identifier of the signal #2. For another example, the measurement information includes two elements: an element #1 and an element #2. The element #1 includes three fields. One field indicates a first-path power of a signal #1, another field indicates a first-path delay of the signal #1, and the remaining field indicates an identifier of a resource carrying the signal #1. The element #2 also includes three fields. One field indicates a first-path power of a signal #2, another field indicates a first-path delay of the signal #2, and the remaining field indicates an identifier of a resource carrying the signal #2. For still another example, the measurement information includes two elements: an element #1 and an element #2. The element #1 includes three fields. One field indicates a first-path power of a signal #1, another field indicates a first-path delay of the signal #1, and the remaining field indicates an identifier of a beam for sending the signal #1. The element #2 also includes three fields. One field indicates a first-path power of a signal #2, another field indicates a first-path delay of the signal #2, and the remaining field indicates an identifier of a beam for sending the signal #2.

For ease of understanding, the following describes, with reference to a specific example, a manner of determining the measurement information in the case shown in the implementation #2.

### Example 3

As shown in FIG. 5, the terminal device receives the four signals on the four resources (for example, receives the signal #1 on the resource #1, receives the signal #2 on the resource #2, receives the signal #3 on the resource #3, and receives the signal #4 on the resource #4, where the signal #1 is sent by using the beam #1, the signal #2 is sent by using the beam #2, the signal #3 is sent by using the beam #3, and the signal #4 is sent by using the beam #4).

First, the terminal device may calculate a channel impulse response #1 based on the signal #1 received on the resource #1, to obtain a delay and a power of each propagation path that the signal #1 passes through, where a first-path delay of the signal #1 is denoted as t1, and a first-path power is denoted as p1. The terminal device may calculate a channel impulse response #2 based on the signal #2 received on the resource #2, to obtain a delay and a power of each propagation path that the signal #2 passes through, where a first-path delay of the signal #2 is denoted as t2, and a first-path power is denoted as p2. The terminal device may calculate a channel impulse response #3 based on the signal #3 received on the resource #3, to obtain a delay and a power of each propagation path that the signal #3 passes through, where a first-path delay of the signal #3 is denoted as t3, and a first-path power is denoted as p3. The terminal device may calculate a channel impulse response #4 based on the signal #4 received on the resource #4, to obtain a delay and a power of each propagation path that the signal #4 passes through, where a first-path delay of the signal #4 is denoted as t4, and a first-path power is denoted as p4.

Then, the terminal device determines the measurement information.

For example, the measurement information includes an identifier of the signal #1, information about the first-path delay of the signal #1, information about the first-path power of the signal #1, an identifier of the signal #2, information about the first-path delay of the signal #2, information about the first-path power of the signal #2, an identifier of the signal #3, information about the first-path delay of the signal #3, information about the first-path power of the signal #3, an identifier of the signal #4, information about the first-path delay of the signal #4, and information about the first-path power of the signal #4.

For another example, the measurement information includes at least one of information about the first-path delay of the signal #1, information about the first-path delay of the signal #2, information about the first-path delay of the signal #3, and information about the first-path delay of the signal #4.

For another example, the measurement information includes information about the first-path delay of the signal #1 and an identifier of the signal #1.

For another example, the measurement information includes information about the first-path delay of the signal #1, an identifier of the signal #1, and information about the first-path power of the signal #1.

Further, after determining the measurement information, the terminal device may report the measurement information to the network device. The method procedure shown in FIG. 4 further includes the following step.

S430: Send the measurement information.

In this embodiment, sending the measurement information is also equivalent to outputting the measurement information. For example, the following two possibilities may be included.

Possibility 1: The terminal device sends the measurement information to the network device.

Possibility 2: After determining the measurement information through calculation, a baseband chip or a processor of the terminal device may output the measurement information to a radio frequency unit of the terminal device. Further, the radio frequency unit may send the measurement information to the network device.

Correspondingly, the network device receives the measurement information from the terminal device.

It should be understood that this embodiment does not constitute any limitation on a manner in which the terminal device sends the measurement information to the network device, and mainly involves content included in the measurement information.

Optionally, before the terminal device performs steps S420 and S430, the network device sends a measurement request to the terminal device, to trigger the terminal device to measure a received signal. The terminal determines the measurement information based on the measurement request, and sends the measurement information to the network device.

Optionally, the measurement information is carried in a random access response message 3.

S440: The network device determines a specific status of a signal transmission path.

For example, in this embodiment, after receiving the measurement information reported by the terminal device, the network device may determine a specific status of the signal transmission path between the terminal device and the network device based on the measurement information (for example, determine whether the LOS path exists between the terminal device and the network device), so that the network device can determine whether the sensing information of the terminal device can be used to enhance the performance of communication with the terminal device.

In a possible implementation, the measurement information reported by the terminal device includes the identifier of the first signal.

In this implementation, the network device may determine, based on the identifier of the first signal and prior information of the network device, whether a communication connection between the terminal device and the network device is the LOS path.

For example, the prior information of the network device includes an index of a synchronization signal block SSB in a random access response feedback from the terminal device (for example, the network device receives the random access response feedback, where the random access response feedback includes the index of the SSB). The network device determines, by comparing the identifier of the first signal and the index of the SSB, whether the communication connection between the terminal device and the network device is the LOS path. In a possible implementation, when the identifier of the first signal is different from the index of the SSB, it may be considered that the communication connection between the terminal device and the network device is not the LOS path; or when the identifier of the first signal is the same as the index of the SSB, it may be considered that the communication connection between the terminal device and the network device is the LOS path.

In another possible implementation, the measurement information reported by the terminal device includes information about a first-path delay of at least one of the plurality of signals.

In this implementation, the network device determines, based on the information about the first-path delay of the at least one signal, whether the communication connection between the terminal device and the network device is the LOS path.

For example, the information about the first-path delay of the at least one signal that is reported by the terminal device may be understood as fingerprint information. The network device may predict, based on at least one measurement result by using algorithms such as machine learning or artificial intelligence, whether the communication connection between the terminal device and the network device is the LOS path, and determine, based on a prediction result, whether the network device uses the sensing information to assist the terminal device in communication.

In the communication method shown in FIG. 4, the terminal device reports measurement information of a signal sent by the network device, so that the network device can determine whether the communication connection between the terminal device and the network device is the LOS path. The network device determines whether the communication connection between the terminal device and the network device is the LOS path, so that the network device can determine whether the sensing information can be used to assist in communication, thereby improving the performance of communication between the terminal device and the network device.

For ease of understanding, the following describes, with reference to a specific example, the communication method shown in FIG. 4.

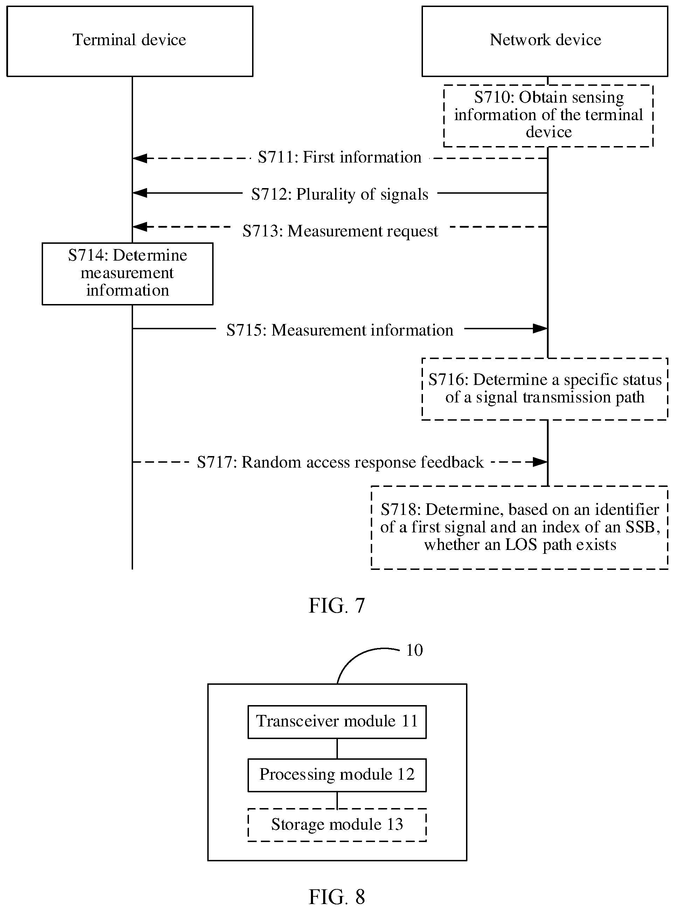

FIG. 7 is a schematic flowchart of another communication method according to this application. The method includes the following steps.

S710: A network device obtains sensing information of a terminal device.

In this embodiment, the network device may determine a status of a signal transmission path between the network device and the terminal device. For example, the network device determines whether an LOS path exists between the network device and the terminal device, to further determine whether the sensing information can be used for assisting in communication between the network device and the terminal device, thereby enhancing performance of communication between the terminal device and the network device.

Specifically, the network device may determine the status of the signal transmission path between the network device and the terminal device by using the communication procedure shown in FIG. 4. In this case, the method procedure shown in FIG. 7 may further include the following steps.

S711: The network device sends first information to the terminal device.

Optionally, the network device indicates, by using the first information, a resource for signal transmission.

S712: The network device sends a plurality of signals to the terminal device.

Refer to the descriptions of step S410 in FIG. 4. Details are not described herein again.

S713: The network sends a measurement request to the terminal device.

Optionally, the network device triggers, by using the measurement request, the terminal device to measure the received signals.

S714: The terminal device determines measurement information.

S715: The terminal device sends the measurement information to the network device.

S716: The network device determines a specific status of the signal transmission path.

For steps S714 to S716, refer to the descriptions of steps S420 to S440 in FIG. 4. Details are not described herein again.

For example, if the measurement information includes an identifier of a first signal, that the network device determines the specific status of the signal transmission path shown in step S716 includes: The network device may determine, based on the identifier of the first signal and prior information of the network device, whether a communication connection between the terminal device and the network device is the LOS path.

For example, the method procedure shown in FIG. 7 further includes the following steps.

S717: The network device receives a random access response feedback from the terminal device.

The random access response feedback includes an index of a synchronization signal block SSB.

S718: The network device determines, based on the identifier of the first signal and the index of the SSB, whether the LOS path exists.

It should be noted that a sequence of step S710 and steps S711 to S716 is not limited. The network device may first obtain the sensing information, and then determine the specific status of the signal transmission path, to determine whether the sensing information can be used for assisting in communication. Alternatively, the network device may first determine the specific status of the signal transmission path, and after subsequently obtaining the sensing information, may directly determine whether the sensing information can be used for assisting in communication.

It should be further noted that FIG. 7 is merely an example, and does not constitute any limitation on the protection scope of this application. The method for determining the specific status of the signal transmission path provided in this application may be further applied to another scenario in which the status of the signal transmission path needs to be determined.

It should be understood that the sequence numbers of the foregoing processes do not mean execution sequences. The execution sequence of the processes should be determined based on functions and internal logic of the processes, and should not be construed as any limitation on implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be further understood that in some of the foregoing embodiments, a device in a conventional network architecture is mainly used as an example for description (for example, the network device and the terminal device). It should be understood that a specific form of the device is not limited in embodiments of this application. For example, all devices that can implement a same function in the future are applicable to embodiments of this application.

It may be understood that, in the foregoing method embodiments, methods and operations implemented by a device (for example, the network device or the terminal device) may alternatively be implemented by a component (for example, a chip or a circuit) of the device.

The foregoing describes in detail, with reference to FIG. 4, the communication method provided in embodiments of this application. The foregoing communication method is mainly described from a perspective of interaction between the terminal device and the network device. It may be understood that, to implement the foregoing functions, the terminal device and the network device include corresponding hardware structures and/or software modules for performing the functions.

A person skilled in the art may be aware that, with reference to the examples described in embodiments disclosed in this specification, units and algorithm steps can be implemented by hardware or a combination of computer software and hardware in this application. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

The following describes in detail a communication apparatus provided in this application with reference to FIG. 8 to FIG. 10. It should be understood that descriptions of apparatus embodiments correspond to the descriptions of the method embodiments. Therefore, for content that is not described in detail, refer to the foregoing method embodiments. For brevity, some content is not described again.

In embodiments of this application, functional modules of a transmitting device or a receiving device may be obtained through division based on the foregoing method examples. For example, each functional module may be obtained through division based on each corresponding function, or two or more functions may be integrated into one processing module. The integrated module may be implemented in the form of hardware, or may be implemented in a form of a software functional module. It should be noted that, in embodiments of this application, module division is an example, and is merely a logical function division. In actual implementation, another division manner may be used. An example in which each functional module is obtained through division based on each corresponding function is used below for description.

FIG. 8 is a schematic block diagram of a communication apparatus 10 according to an embodiment of this application. The apparatus 10 includes a transceiver module 11 and a processing module 12. The transceiver module 11 may implement a corresponding communication function, and the processing module 12 is configured to perform data processing; or the transceiver module 11 is configured to perform receiving-related and sending-related operations, and the processing module 12 is configured to perform an operation other than receiving and sending. The transceiver module 11 may also be referred to as a communication interface or a communication unit.

Optionally, the apparatus 10 may further include a storage module 13. The storage module 13 may be configured to store instructions and/or data. The processing module 12 may read the instructions and/or the data in the storage module, to cause the apparatus to implement actions of a device in the foregoing method embodiments.

In a design, the apparatus 10 may correspond to the terminal device in the foregoing method embodiments, or a component (for example, a chip) of the terminal device.

The apparatus 10 may implement corresponding steps or procedures performed by the terminal device in the foregoing method embodiments. The transceiver module 11 may be configured to perform receiving-related and sending-related operations of the terminal device in the foregoing method embodiments, and the processing module 12 may be configured to perform a processing-related operation of the terminal device in the foregoing method embodiments.

In a possible implementation, the transceiver module 11 is configured to receive a plurality of signals. The transceiver module 11 is configured to send measurement information, where the measurement information includes information about a first-path delay of at least one of the plurality of signals or an identifier of a first signal, and the first signal is a signal having a smallest first-path delay in the plurality of signals.

When the apparatus 10 is configured to perform the method in FIG. 4, the transceiver module 11 may be configured to perform steps of receiving information and sending information in the method, for example, steps S410 and S430; and the processing module 12 may be configured to perform a processing step in the method, for example, step S420.

It should be understood that a specific process in which the units perform the foregoing corresponding steps is described in detail in the foregoing method embodiments. For brevity, details are not described herein.

In another design, the apparatus 10 may correspond to the network device in the foregoing method embodiments, or a component (for example, a chip) of the network device.

The apparatus 10 may implement corresponding steps or procedures performed by the network device in the foregoing method embodiments. The transceiver module 11 may be configured to perform receiving-related and sending-related operations of the network device in the foregoing method embodiments, and the processing module 12 may be configured to perform a processing-related operation of the network device in the foregoing method embodiments.

In a possible implementation, the transceiver module 11 is configured to send a plurality of signals. The transceiver module 11 is configured to receive measurement information, where the measurement information includes information about a first-path delay of at least one of the plurality of signals or an identifier of a first signal, and the first signal is a signal having a smallest first-path delay in the plurality of signals.

When the apparatus 10 is configured to perform the method in FIG. 4, the transceiver module 11 may be configured to perform steps of receiving information and sending information in the method, for example, steps S410 and S430; and the processing module 12 may be configured to perform a processing step in the method, for example, step S440.

It should be understood that a specific process in which the units perform the foregoing corresponding steps is described in detail in the foregoing method embodiments. For brevity, details are not described herein.

It should be further understood that the apparatus 10 herein is presented in a form of a functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 10 may be specifically a mobility management network element in the foregoing embodiments, and may be configured to perform procedures and/or steps corresponding to the mobility management network element in the foregoing method embodiments. Alternatively, the apparatus 10 may be specifically the terminal device in the foregoing embodiments, and may be configured to perform procedures and/or steps corresponding to the terminal device in the foregoing method embodiments. To avoid repetition, details are not described herein again.

The apparatus 10 in each of the foregoing solutions has functions of implementing corresponding steps performed by a device (for example, the terminal device or the network device) in the foregoing methods. The function may be implemented by hardware, or may be implemented by hardware executing corresponding software. The hardware or software includes one or more modules corresponding to the foregoing functions. For example, the transceiver module may be replaced with a transceiver (for example, a sending unit in the transceiver module may be replaced with a transmitter, and a receiving unit in the transceiver module may be replaced with a receiver), and another unit, for example, the processing module, may be replaced with a processor, to separately perform receiving and sending operations and a related processing operation in the method embodiments.

In addition, the transceiver module 11 may alternatively be a transceiver circuit (for example, may include a receiving circuit and a sending circuit), and the processing module may be a processing circuit.

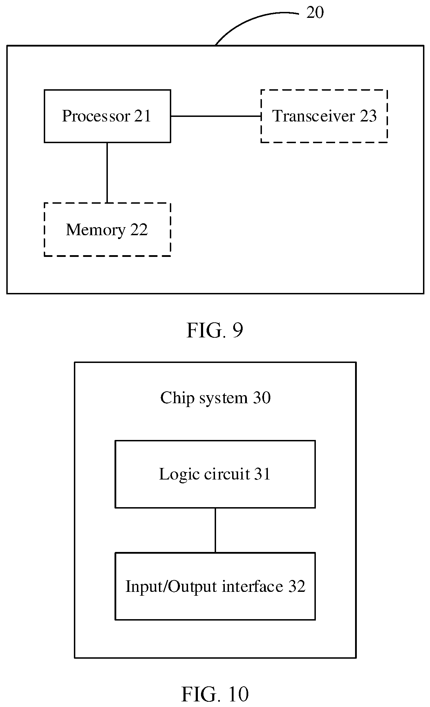

FIG. 9 is a diagram of another communication apparatus 20 according to an embodiment of this application. The apparatus 20 includes a processor 21. The processor 21 is configured to execute a computer program or instructions stored in a memory 22, or read data/signaling stored in the memory 22, to perform the methods in the foregoing method embodiments. Optionally, there are one or more processors 21.

Optionally, as shown in FIG. 9, the apparatus 20 further includes the memory 22, and the memory 22 is configured to store the computer program or the instructions and/or the data. The memory 22 and the processor 21 may be integrated together, or may be disposed separately. Optionally, there are one or more memories 22.

Optionally, as shown in FIG. 9, the apparatus 20 further includes a transceiver 23, and the transceiver 23 is configured to receive a signal and/or send a signal. For example, the processor 21 is configured to control the transceiver 23 to receive a signal and/or send a signal.

In a solution, the apparatus 20 is configured to implement operations performed by the terminal device in the foregoing method embodiments.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (a storage module) may be integrated into the processor.

It should further be noted that the memory described herein is intended to include, but is not limited to, these and any other appropriate type of memory.

FIG. 10 is a diagram of a chip system 30 according to an embodiment of this application. The chip system 30 (also referred to as a processing system) includes a logic circuit 31 and an input/output interface (input/output interface) 32.

The logic circuit 31 may be a processing circuit in the chip system 30. The logic circuit 31 may be coupled to a storage unit, and invoke instructions in the storage unit, so that the chip system 30 can implement the method and functions in embodiments of this application. The input/output interface 32 may be an input/output circuit in the chip system 30, and outputs information processed by the chip system 30, or inputs to-be-processed data or signaling information to the chip system 30 for processing.

In a solution, the chip system 30 is configured to implement operations performed by the terminal device in the foregoing method embodiments.

For example, the logic circuit 31 is configured to implement processing-related operations performed by the terminal device in the foregoing method embodiments, and the input/output interface 32 is configured to implement sending-related and/or receiving-related operations performed by the terminal device in the foregoing method embodiments.

An embodiment of this application further provides a computer-readable storage medium. The computer-readable storage medium stores computer instructions for implementing a method performed by a device in the foregoing method embodiments.

For example, when a computer program is executed by a computer, the computer is caused to implement the method performed by the terminal device or the network device in the foregoing method embodiments.

An embodiment of this application further provides a computer program product, including instructions. When the instructions are executed by a computer, the method performed by the terminal device or the network device in the foregoing method embodiments is implemented.

An embodiment of this application further provides a communication system, including the foregoing terminal device and network device.

For explanations and beneficial effects of related content of any one of the apparatuses provided above, refer to the corresponding method embodiments provided above. Details are not described herein again.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, the part contributing to the conventional technology, or some of the technical solutions may be implemented in a form of a software product. The computer software product is stored in a storage medium, and includes several instructions for enabling a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving a plurality of signals; and
sending measurement information, wherein the measurement information comprises information about a first-path delay of at least one of the plurality of signals or an identifier of a first signal, and the first signal is a signal having a smallest first-path delay in the plurality of signals.

2. The method according to claim 1, wherein the measurement information comprises the information about the first-path delay of the at least one of the plurality of signals and an identifier of the at least one signal.

3. The method according to claim 2, wherein the measurement information further comprises information about a first-path power of at least one of the plurality of signals.

4. The method according to claim 1, wherein the measurement information comprises the identifier of the first signal, and information about a first-path delay and/or a first-path power of the first signal.

5. The method according to any one of claims 1 to 4, wherein the information about the first-path delay indicates one of N first-path delays, and N is an integer greater than 1.

6. The method according to claim 5, wherein the N first-path delays comprise a first first-path delay, and the first first-path delay is a first-path delay less than 0.

7. The method according to claim 3 or 4, wherein the information about the first-path power indicates one of Q first-path powers, and Q is an integer greater than 1.

8. The method according to any one of claims 1 to 7, wherein before the sending the measurement information, the method further comprises:
determining a first-path delay and/or a first-path power of each of the plurality of signals.

9. The method according to any one of claims 1 to 8, wherein the plurality of signals comprise the first signal and a second signal, and the first signal and the second signal correspond to different beam directions.

10. The method according to any one of claims 1 to 9, wherein the identifier of the first signal is an identifier of a beam corresponding to the first signal and/or an identifier of a resource occupied by the first signal.

11. The method according to any one of claims 1 to 10, wherein the measurement information is used for determining whether sensing information is used for assisting in communication.

12. A communication method, comprising:
sending a plurality of signals; and
receiving measurement information, wherein the measurement information comprises information about a first-path delay of at least one of the plurality of signals or an identifier of a first signal, and the first signal is a signal having a smallest first-path delay in the plurality of signals.

13. The method according to claim 12, wherein the measurement information comprises the information about the first-path delay of the at least one of the plurality of signals and an identifier of the at least one signal.

14. The method according to claim 12 or 13, wherein the measurement information further comprises information about a first-path power of at least one of the plurality of signals.

15. The method according to claim 12, wherein the measurement information comprises the identifier of the first signal, and information about a first-path delay and/or a first-path power of the first signal.

16. The method according to any one of claims 12 to 15, wherein the information about the first-path delay indicates one of N first-path delays, and N is an integer greater than 1.

17. The method according to claim 16, wherein the N first-path delays comprise a first first-path delay, and the first first-path delay is a first-path delay less than 0.

18. The method according to claim 14 or 15, wherein the information about the first-path power indicates one of Q first-path powers, and Q is an integer greater than 1.

19. The method according to any one of claims 12 to 18, wherein the plurality of signals comprise the first signal and a second signal, and the first signal and the second signal correspond to different beam directions.

20. The method according to any one of claims 12 to 19, wherein the identifier of the first signal is an identifier of a beam corresponding to the first signal and/or an identifier of a resource occupied by the first signal.

21. The method according to any one of claims 12 to 20, wherein the method further comprises:
determining, based on the measurement information result, whether a line of sight LOS path exists.

22. The method according to claim 21, wherein the method further comprises:
receiving a random access response feedback, wherein the random access response feedback comprises an index of a synchronization signal block SSB; and
the determining, based on the measurement information, whether the LOS path exists comprises:
determining, based on the identifier of the first signal and the index of the SSB, whether the LOS path exists.

23. The method according to any one of claims 12 to 20, wherein the method further comprises:
determining, based on the measurement information, whether sensing information is used for assisting in communication.

24. A communication apparatus, wherein the apparatus comprises a unit configured to perform the method according to any one of claims 1 to 11.

25. A communication apparatus, wherein the apparatus comprises a unit configured to perform the method according to any one of claims 12 to 23.

26. A communication system, comprising the communication apparatus according to claim 24 and the communication apparatus according to claim 25.

27. A communication apparatus, comprising a processor, wherein the processor is coupled to a memory, the memory is configured to store a computer program or instructions, and the processor is configured to execute the computer program or the instructions in the memory, to cause the apparatus to perform the method according to any one of claims 1 to 23.

28. A computer-readable storage medium, wherein the computer-readable storage medium stores a computer program or instructions, and when the computer program or the instructions are executed by a computer, the computer is caused to perform the method according to any one of claims 1 to 23.

29. A chip or a chip system, comprising a processor, configured to invoke a computer program from a memory and run the computer program, to cause a communication device on which the chip system is installed to perform the method according to any one of claims 1 to 23.

30. A computer program product, wherein when the computer program product runs on a computer, the computer is caused to perform the method according to any one of claims 1 to 23.
